# FASCICULE DE BREVET EUROPEEN

(11) **EP 1 660 364 B1**
(45) Date de publication et mention de la délivrance du brevet: **29.04.2009**
(21) Numéro de dépôt: 04786334.5
(22) Date de dépôt: 20.08.2004
(51) Int. Cl.: B62D 21/15

(54) **STRUCTURE D'UNE PARTIE AVANT DE VEHICULE AUTOMOBILE**
KRAFTFAHRZEUGVORDERTEILKONSTRUKTION
MOTOR VEHICLE FOREBODY STRUCTURE

(30) Priorité: 28.08.2003 FR 0310254
(43) Date de publication de la demande: 31.05.2006
(73) Titulaire: RENAULT S.A.S., 92100 Boulogne Billancourt (FR)
(72) Inventeur: VIVERO, François, F-78150 Le Chesnay (FR)
(74) Mandataire: Guyon, Rodolphe C.
(86) Numéro de dépôt international: PCT/FR2004/002169
(87) Numéro de publication internationale: WO 2005/023627

(56) Documents cités:
- EP-A- 1 256 510
- EP-A- 1 281 603
- DE-A- 4 302 878
- DE-A- 19 835 527
- FR-A- 2 741 030

## Description

La présente invention concerne la structure d'une partie avant de véhicule automobile.

Le document EP 1256519 A divulgue une structure dune partie avant de voiture automobile selon le préambule de la revendication 1.

La présente invention concerne plus particulièrement les structures du type comportant, d'une part, une partie supérieure formée d'au moins deux longerons qui s'étendent longitudinalement en avant de l'habitacle du véhicule et qui sont reliés dans leur partie extrême avant par une traverse qui, en cas de choc frontal, absorbe une quantité d'énergie suffisante pour minimiser la déformation des longerons, et comportant, d'autre part, une partie inférieure formée d'au moins un berceau cadre qui supporte des éléments fonctionnels du véhicule, qui est constitué d'au moins deux bras longitudinaux s'étendant vers l'avant du véhicule, et qui est relié aux longerons de la partie supérieure par l'intermédiaire de tirants verticaux.

Ce type de structure permet de traiter indépendamment au moins deux caractéristiques mécaniques distinctes, à savoir la suspension et le traitement des chocs frontaux. La partie inférieure de la structure, connue par l'homme du métier sous la dénomination de "voie basse", porte des éléments fonctionnels du véhicule, à titre d'exemple le groupe moto-propulseur, par l'intermédiaire d'un berceau. Cette voie basse permet d'atténuer les vibrations provenant du roulement du véhicule sur la chaussée et provenant du moteur supporté, grâce au fait que le berceau est en partie « découplé » de la caisse. La partie supérieure de la structure, connue par l'homme du métier sous la dénomination de "voie haute", permet d'encaisser les chocs frontaux grâce à la résilience des longerons. Cette voie haute doit donc absorber l'énergie consécutive à des efforts de choc important, de manière à ce qu'un tel choc ne provoque pas d'intrusion dans l'habitable.

Les constructeurs cherchent à absorber lors des chocs frontaux des efforts de plus en plus grands pour obtenir une sécurité optimale pour les passagers. Or, des contraintes d'architecture, de poids, et d'esthétique du véhicule, empêchent le surdimensionnement en épaisseur et en longueur des longerons pour encaisser ces efforts.

Le document EP-B1-0926048 décrit et représente un châssis auxiliaire situés sous les longerons, l'énergie absorbée par les éléments d'absorptions transversaux, situés en avant des longerons et du châssis auxiliaire, étant alors répartie entre les longerons et ce châssis auxiliaire. Tel qu'elle est évoquée dans la description de ce document, cette répartition s'applique dans le cas de petits chocs, par exemple des "chocs piétons" dans lesquels des piétons sont percutées par le véhicule au niveau du pare-chocs, car la structure représentée entraînerait une déformation trop importante du châssis auxiliaire en cas de choc frontaux importants, par exemple des chocs entre deux véhicules.

En effet, un effort longitudinal important sur l'élément d'absorption transversal en avant du châssis auxiliaire engendrerait lors du dégalbage de cet élément, c'est à dire son retour de sa forme galbée à une forme rectiligne initiale, des contraintes transversales sur les éléments longitudinaux du châssis auxiliaire et tendrait à les fragiliser en les écartant.

Une structure avant doit en fait gérer deux types de choc différents, les petits chocs, comme le "choc piéton" évoqué ci dessus, qui génère peu d'énergie a absorber par le véhicule et les chocs à forte énergie. Ces chocs dégageant une forte énergie peuvent être de type "choc Danner", c'est à dire des chocs à faible vitesse qui ne doit avoir pour incidence que le changement limité de pièces de la structure, ou de type "crashs", qui ne doivent pas entraîner de déformation de l'habitacle pour une sécurité optimale des passager.

Ces différents chocs sont difficiles à gérer dans les mêmes zones du véhicule. Il est ainsi connu d'ajouter de la mousse pour le traitement des "chocs piétons" sur les traverses destinées à traiter le choc Danner, mais le traitement des "chocs piétons" n'est dans ce cas pas optimisé. Il est alors connu de prévoir des barres de "choc piéton" situées en "voie basse", ce qui est efficace dans ce type de choc mais ne permet pas l'implantation d'autre éléments d'absorption.

Il est donc un objet de l'invention d'obtenir une structure de partie avant de véhicule automobile qui puisse répartir les énergies absorbées en cas de choc, sans dégrader la partie inférieure du véhicule, moins solide.

Il est également un objet de l'invention d'obtenir une telle structure dont la même partie inférieure puisse prendre en compte les "chocs piétons" et les "chocs Danner".

Dans ce but, l'invention propose une structure de partie avant de véhicule automobile du type décrit précédemment, caractérisée en ce que les deux bras longitudinaux sont reliés à leur extrémité avant par un bras transversal, et en ce que chaque absorbeur présente une extrémité avant libre.

La présence d'absorbeurs d'énergie fixés sur le berceau cadre permet ainsi de répartir les efforts induits par le choc entre la partie supérieure de la partie avant (absorption par la traverse) et la partie inférieure de cette partie avant (absorption par les absorbeurs).

Selon une caractéristique de l'invention, la structure comporte des absorbeurs d'énergie dont l'axe principal longitudinal est situé dans le plan vertical médian de chaque bras longitudinal du berceau cadre.

Ce positionnement des absorbeurs permet de s'affranchir des composantes d'efforts induites transversalement et qui fragilisent les bras du berceau en les écartant l'un de l'autre. Les absorbeurs d'énergie sont situés sensiblement à la même hauteur que les bras longitudinaux du berceau cadre, de sorte que les efforts non encaissés par les absorbeurs sont transmis, dans un prolongement longitudinal, aux bras du berceau. Selon une variante de réalisation, les absorbeurs d'énérgie sont situés à une hauteur inférieure à celle des bras longitudinaux du berceau cadre.

Selon une caractéristique de l'invention, la valeur de la dimension longitudinale des absorbeurs d'énergie est telle que, avant le choc, l'extrémité avant des absorbeurs d'énergie est longitudinalement en retrait de l'extrémité avant de la traverse de la partie supérieure. Ainsi, l'absorption de l'énergie se fait dans un premier temps par la traverse extrême avant située en voie haute puis, si le choc est important, l'absorption se fait alors à la fois par cette traverse et par les absorbeurs situés en voie basse.

L'invention prend également en compte la gestion des petits chocs, du type « choc piéton ». A ce titre, une barre transversale est située en avant des absorbeurs d'énergie, au niveau de la partie inférieure.

Cette barre transversale est fixée au berceau cadre par l'intermédiaire de montants sensiblement longitudinaux, qui sont deux montants latéraux dont l'axe principal est situé dans le plan vertical médian de chaque bras longitudinal du berceau cadre et au moins un montant central.

Selon une caractéristique de l'invention, les absorbeurs d'énergie chevauchent les montants latéraux.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique en perspective d'une structure avant de véhicule automobile selon un premier mode, de réalisation de l'invention,
- la figure 2 est une vue de face de la structure avant selon le mode de réalisation représenté à la figure 1, à l'état neuf,
- la figure 2b est une vue similaire à celle de la figure 2, dans une première phase de choc,
- la figure 2c est une vue similaire à celle de la figure 2b, dans une deuxième phase de choc,
- la figure 3 est une vue de côté de la structure avant selon un second mode de réalisation de l'invention,
- la figure 4 est une vue de dessus de la structure avant selon le mode de réalisation représenté à la figure 3,
- la figure 5 est une représentation schématique d'une structure de véhicule avec un dispositif de traitement des chocs piétons en voie basse,
- la figure 6 est une représentation schématique d'une structure de véhicule avec un dispositif de traitement des chocs piétons en voie basse,
- la figure 7 est une représentation schématique de l'ensemble illustré à la figure 6.

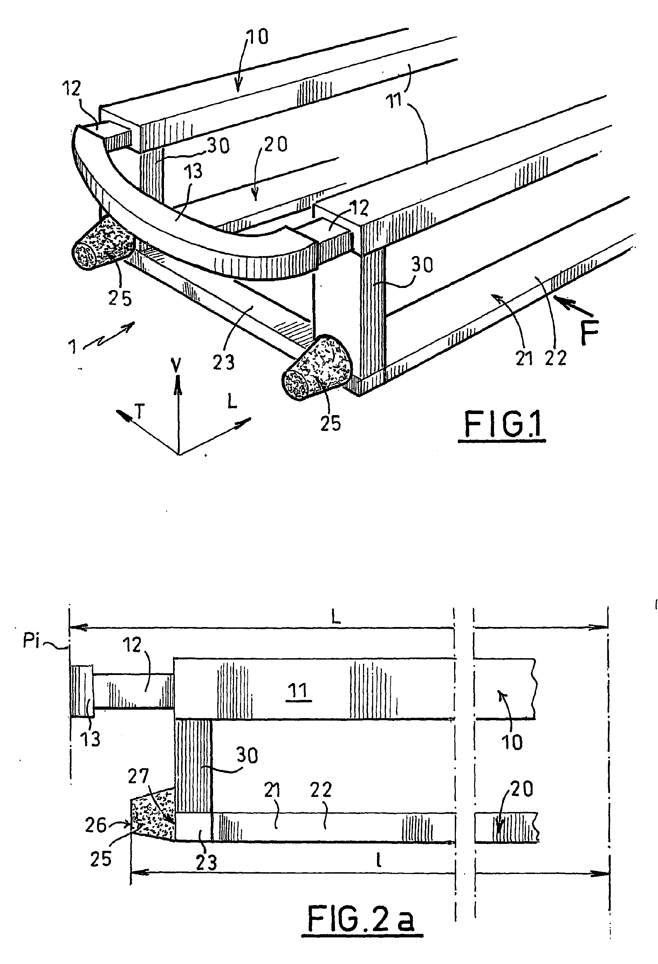

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

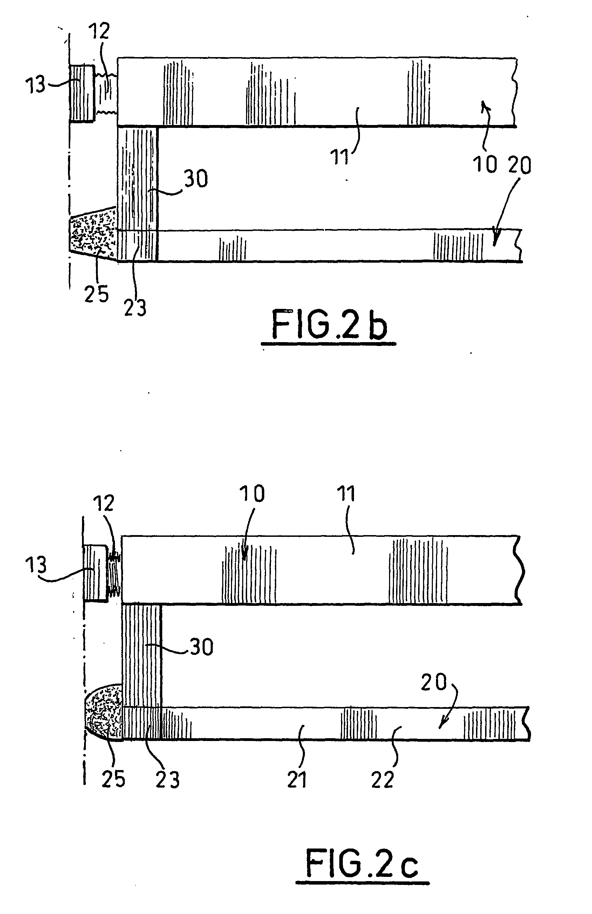

La structure selon l'invention présente une symétrie générale de conception par rapport à un plan longitudinal vertical médian. Telle que représentée aux figures 1, 2, 2b et 2c, une structure de partie avant 1 de véhicule selon l'invention comporte principalement une partie supérieure 10 formée dans un plan sensiblement horizontal, depuis l'habitacle vers l'avant du véhicule, par des longerons 11 qui sont prolongées vers l'avant par des boîtiers 12 et qui sont reliés transversalement par une traverse 13 qui est fixée sur l'extrémité avant de ces boîtiers 12.

La structure 1 comporte également une partie inférieure 20 dans un plan sensiblement horizontal et à une hauteur inférieure de celle de la partie supérieure 10. Cette partie comprend un berceau cadre 21 qui à pour rôle d'assurer le support d'éléments fonctionnels du véhicule, et plus particulièrement du groupe moto-propulseur. Ce berceau cadre 21 est formé, depuis l'habitacle vers l'avant du véhicule, par au moins deux bras longitudinaux 22 reliés à leur extrémité avant par un bras transversal 23. Au niveau de cette partie inférieure 20, des absorbeurs d'énergie 25 sont fixés sur le berceau cadre 21 en avant des bras longitudinaux 22.

La partie inférieure 20 est reliée, à la partie supérieure 10 par des montants verticaux 30, qui sont situés près de l'extrémité avant des parties inférieures 20 et supérieures 10. Les montants 30 permettent la tenue du berceau cadre 21 et de créer ainsi un effort derrière les absorbeurs 25.

Tel que représenté sur les figures, les absorbeurs 25 présentent une forme tronconique dont l'axe principal est longitudinal, dont la base de petit diamètre 26 est situé longitudinalement en avant de la base de grand diamètre 27, qui est fixée sur le berceau cadre 21. Les absorbeurs peuvent présenter d'autres formes (par exemple, une forme cylindrique) sans pour autant sortir du contexte de l'invention, dés lors que la plus grande dimension de l'absorbeur est sensiblement longitudinale.

La base de grand diamètre 27 des absorbeurs tronconiques 25 est fixée au berceau cadre 21 et leur extrémité avant s'étend vers l'avant du véhicule, de telle sorte que, en position initiale avant un choc représentée figure 2, l'extrémité libre avant des absorbeurs 25 est située longitudinalement en retrait de la traverse 13 de la partie supérieure 10 par rapport à l'avant du véhicule.

Ainsi, en cas de choc frontal important, l'énergie induite résiduelle du choc est initialement absorbée par la traverse 13 de la partie supérieure 10. Cette traverse 13 présente des caractéristiques géométriques et une précontrainte telles que la traverse 13 est capable d'absorber une grande partie de l'énergie de choc. La traverse 13, qui présente avant le choc une forme galbée vers l'avant du véhicule, subit un dégalbage apte à la redresser et entraîne par la suite une compression des boîtiers 12 fixés à l'extrémité avant des longerons 11. Le plan vertical dans lequel sont situés les extrémités avant de la traverse 13, et qui représente le plan d'impact Pi, recule alors en direction de l'habitacle.

Dans le cas de choc frontal très important, un objectif au titre de la sécurité est d'empêcher ce plan d'impact de reculer jusque dans habitacle.

Dans le cas d'un choc Danner, dans le but de limiter le coût des réparations, un objectif est d'empêcher le plan d'impact Pi de reculer au delà, de l'extrémité avant des longerons 11 en partie supérieure 10 et de celle du berceau cadre 21 en partie inférieure 20.

Afin de réaliser l'objectif propre à chacun de ces chocs, l'énergie développée par ces différents chocs est absorbée après un recul prédéterminé du plan d'impact conjointement par les absorbeurs 25 en partie inférieure 20 et par la traverse 13 et les boîtiers 12 en partie supérieure 10.

Les figures 2, 2b et 2c représentent un exemple de choc au cours duquel les absorbeurs 25 de la partie inférieure 20 assurent une partie de l'absorption d'énergie. La figure 2 représente ainsi une situation au repos dans laquelle l'extrémité avant de la traverse 13 est distante de l'habitacle d'une valeur L. L'extrémité avant des absorbeurs 25 est distante de l'habitacle d'une valeur 1 qui est inférieure à la valeur L correspondante à la traverse 13. Le plan d'impact Pi est donc un plan vertical passant par l'extrémité de la traverse 13, qui est distant d'un plan vertical de l'habitacle d'une valeur L.

La figure 2b représente une première phase du choc. Ce choc est suffisamment important pour provoquer une déformation des boîtiers 12 et de la traverse 13 et déplacer le plan d'impact Pi vers l'habitacle. Lorsque la distance de l'extrémité avant de la traverse par rapport à l'habitacle devient égale à la distance de l'extrémité avant des absorbeurs par rapport à l'habitacle, le plan d'impact Pi comprend alors l'extrémité avant des absorbeurs 25. Si le choc, est suffisamment important pour qu'il reste de l'énergie à absorber, cette absorption se fait alors (voir figure 2c) par les boîtiers 12 et la traverse 13 en partie supérieure 10, et d'autre part par les absorbeurs 25 en partie inférieure 20.

On peut distinguer trois types de choc.

Dans le cas d'un choc faible, le plan d'impact Pi n'atteint pas l'extrémité avant des absorbeurs 25 qui sont intacts à la fin du choc, et seule la traverse 13 et éventuellement les boîtiers 12 ont besoin d'être changés.

Dans le cas d'un choc Danner, le plan d'impact Pi atteint l'extrémité avant des absorbeurs 25, continue de reculer vers l'habitacle en déformant les absorbeurs 25, mais il n'atteint ni l'extrémité avant du berceau cadre 21, ni celle des longerons 11. Les absorbeurs 25 ont permis d'assurer une partie de l'absorption d'énergie et ont permis d'empêcher le plan d'impact Pi de reculer vers l'habitacle jusqu'aux longerons 11 ou jusqu'au berceau cadre 21. La traverse 13, les boîtiers 12 et les absorbeurs 25 doivent alors être remplacés mais les longerons 11 et le berceau 21 sont intacts.

Enfin, dans le cas d'un choc violent, le plan d'impact Pi s'est reculé vers l'habitacle et a dépasse l'extrémité avant des longerons 12. L'ensemble de la structure avant 1 est déformé et doit être changé mais l'absorption d'énergie conjointe en voie haute par la traverse 13, les boîtiers 12 et les longerons 11, et en voie basse par les absorbeurs 25 et le berceau cadre 21, a permis qu'il n'y ait pas d'intrusion dans l'habitacle et d'assurer la sécurité des passagers.

Tel que l'on peut le voir clairement sur la figure 1, les absorbeurs 25 sont disposés transversalement de telle sorte que leur axe correspondant à leur dimension principale longitudinale est situé dans le même plan vertical que l'axe, longitudinal des longerons Il. Cette disposition particulière permet, lorsque le choc impose une compression des absorbeurs 25, de ne pas transmettre des efforts au berceau cadre 21 dans la partie inférieure 20 selon une composante transversale. Cet objectif de l'invention, c'est à dire ne pas transmettre selon une composante transversale des efforts qui créeraient un écartement des bras longitudinaux, 22, l'un de l'autre et une fragilisation du berceau cadre 21, peut être atteint selon deux variantes de réalisation.

Dans une première variante, représentée dans les figures 1, 2, 2b et 2c, un absorbeur 25 est situé dans le prolongement de chaque bras longitudinal 22. Les efforts sont intégralement transmis longitudinalement de l'absorbeur 25 vers le bras longitudinal 22, lors d'une compression de l'absorbeur 25.

Dans une seconde variante, non représentée, les absorbeurs 25 sont situés à une hauteur supérieure à celle du berceau cadre 21. Les efforts sont alors transmis de l'absorbeur 25 vers le bras longitudinal 22, selon une composante principale longitudinale et une composante verticale. Il sera compris que, de façon avantageuse, les absorbeurs 25 doivent être situés à la même hauteur que les bras longitudinaux 22, mais que les absorbeurs 25 peuvent être situés à une hauteur entre les longerons 11 et le berceau cadre 21. De même, les absorbeurs peuvent être situés à une hauteur inférieure à celle du berceau cadre 21, si la garde au sol, c'est à dire la distance à respecter entre la chaussée et la partie la plus basse du véhicule, est suffisante.

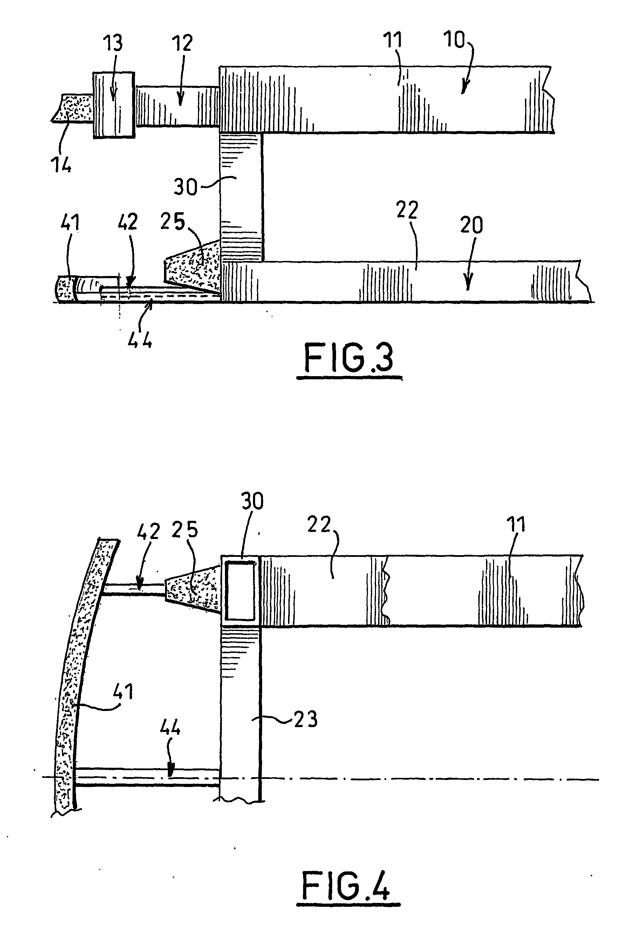

Telle que représentée dans les figures 3 et 4, la partie inférieure 20 de la structure de partie avant 1 selon l'invention est compatible avec un dispositif de traitement des chocs piétons en voie basse. Ce dispositif est constitué d'une barre transversale 41, située en avant des absorbeurs 25. Cette barre 41, sensiblement parallèle au bras transversal 23 du berceau cadre 21, est reliée à ce berceau cadre par l'intermédiaire de montants longitudinaux 42. La longueur des montants 42 est telle que la barre transversale 41 est située longitudinalement en avant des absorbeurs 25 en partie mineure 20, et avantageusement en avant de l'extrémité avant de la traverse 13 en partie supérieure 10.

Selon différentes variantes de ce second mode de réalisation, le nombre des montants 42 peut varier, en étant de préférence au moins égal à trois. La barre transversale 41 est portée par au moins deux montants latéraux 43 et un montant central 44. Le nombre de montants centraux 44 peut varier. Les montants latéraux 43 s'étendent sensiblement longitudinalement dans le prolongement des bras longitudinaux 22 du berceau cadre 21. Cette position transversale des montants latéraux 43 permet une reprise optimale sur les bras longitudinaux 22 des efforts résultant d'un choc piéton.

Les montants latéraux 43 et les absorbeurs 25 sont fixés sur le berceau cadre 21 sensiblement à la même côte transversale, c'est à dire dans l'axe des bras longitudinaux 22 du berceau cadre 21. Les figures 3 et 4 représentant une première variante du second mode de réalisation avec le dispositif de traitement des chocs piétons en voie basse. Afin d'autoriser le positionnement dans le prolongement du bras longitudinal 22 de l'absorbeur 25 et du montant latéral 43, l'absorbeur 25 peut présenter un évidement dans sa partie inférieure afin d'autoriser le passage dans ce logement du montant latéral 43.

Il sera compris que, dans le cas non représenté dans lequel l'absorbeur est situé à une hauteur inférieure au berceau cadre, le logement pour le passage du montant latéral 43 est constitué par un évidement dans la partie supérieure de l'absorbeur 25.

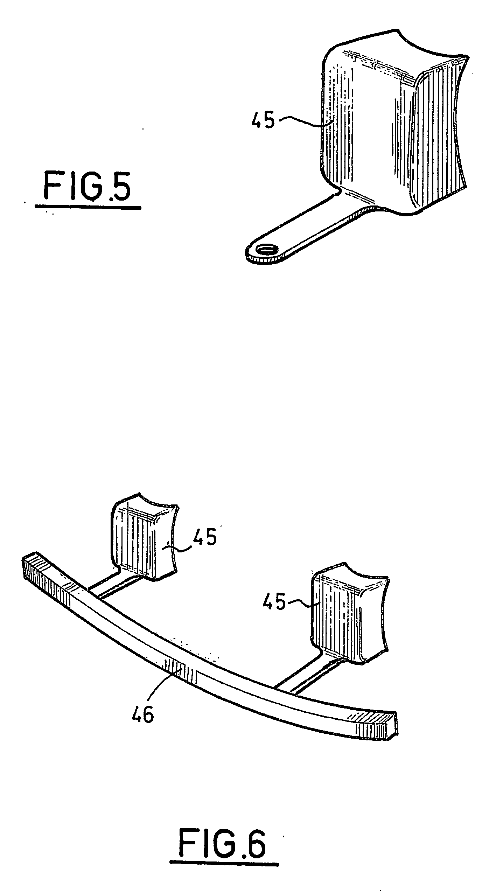

La figure 5 représente une structure de véhicule avec un dispositif de traitement des chocs piétons en voie basse. Afin de permettre le positionnement, dans le prolongement du bras longitudinal 22, de l'absorbeur 25 et du montant latéral 43, la structure peut comporter une pièce unique 45 formée d'un absorbeur 25 et du montant latéral 43 associé. Cette pièce unique 45 comporte alors une première partie correspondant au montant latéral, qui est précontraint sous un premier effort prédéterminé de telle sorte que cette première partie puisse absorber l'énergie générée par un choc piéton, et comporte une deuxième partie correspondant à l'absorbeur qui est précontraint sous un deuxième effort prédéterminé de telle sorte que cette deuxième partie puisse absorber l'énergie générée par un choc Danner. Les différentes précontraintes sont obtenues par des épaisseurs et des nervurages différents des deux parties de la pièce unique 45. La barre transversale 41 est préférentiellement fixée à la face interne du pare chocs, c'est à dire la face du parc choc orientée vers le véhicule.

La figure 6 représenté également une structure de véhicule avec un dispositif de traitement des chocs piétons en voie basse. Afin de permettre le positionnement dans le prolongement du bras longitudinal 22 de l'absorbeur 25 et du montant latéral 43, la structure peut comporter un ensemble unique 46 formé de la barre transversale 41, des montants latéraux 43 et des absorbeurs 25. Dans ce cas, l'ensemble 46, plus lourd qu'un absorbeur 25 unique, doit être monté vissé sur le berceau cadre 21 de sorte que le poids dirigé vers l'avant de l'ensemble 46 ne soit pas trop pénalisant.

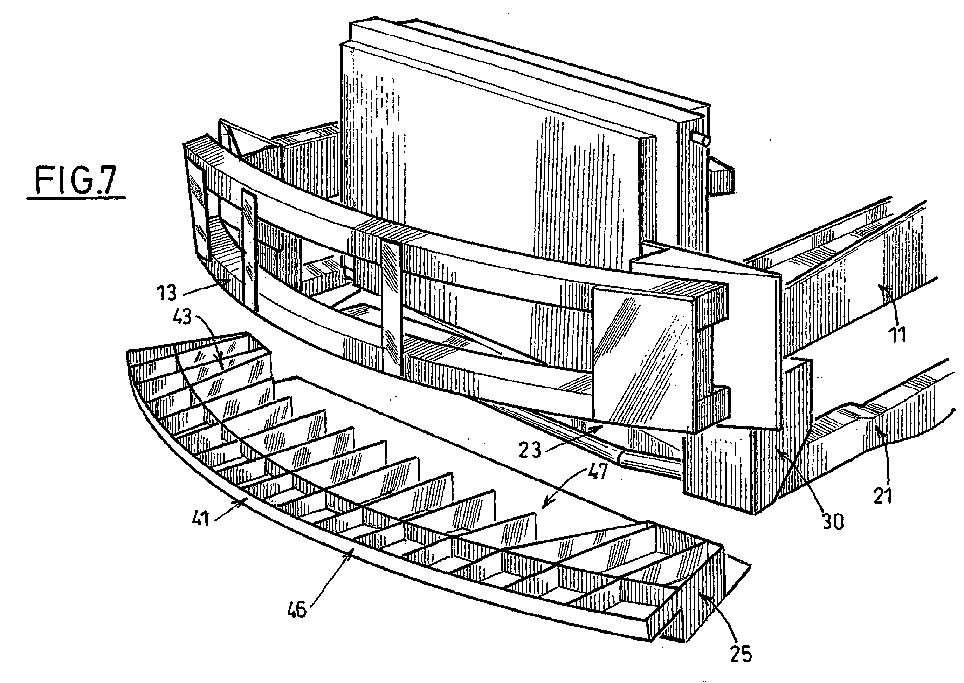

Avantageusement, tel que représenté figure 7, cet ensemble unique 46 peut présenter un carénage inférieur 47 s'étendant sensiblement horizontalement sous la barre transversale 41 et sous les montants longitudinaux 42. L'ensemble unique 46 est alors réalisé de telle sorte que, lorsque la structure de partie avant 1 est montée, le carénage inférieur 47 présente une continuité avec les carénages présents sous le groupe moto-propulseur. Une telle réalisation avec un ensemble unique 46 permet d'obtenir une structure avant dont le montage est aisé, et en cas de choc, une structure dont le remplacement est aisé.

Ces différentes variantes peuvent être associées, telle que représenté figure 3, avec un dispositif de traitement des chocs piéton en voie haute, du type comportant une mousse 14 recouvrant transversalement l'extrémité avant de la traverse 13 dans la partie supérieure 10.

## Revendications

1. Structure d'une partie avant (1) de véhicule automobile, comportant d'une part une partie supérieure (10) formée d'au moins deux 5 longerons (11) qui s'étendent longitudinalement en avant de l'habitacle du véhicule et qui sont reliés dans leur partie extrême avant par une traverse (13) qui en cas de choc frontal absorbe une quantité d'énergie suffisante pour minimiser la déformation des longerons (li), et comportant d'autre part une partie inférieure (20) formée d'au moins un berceau cadre (21) qui supporte 10 des éléments fonctionnels du véhicule, qui est en liaison avec les longerons (il) de la partie supérieure (10) par des montants verticaux (30), et qui est formé d'au moins deux bras longitudinaux (22) s'étendant vers l'avant du véhicule, la structure (1) comportant des absorbeurs d'énergie (25), qui sont fixés sur le berceau cadre (21) vers l'avant du véhicule, la dimension principale de ces absorbeurs d'énergie (25) étant longitudinale, de telle sorte qu'en cas de choc frontal, ces absorbeurs d'énergie (25) absorbent suffisamment d'énergie pour minimiser la déformation du berceau cadre (21),
**caractérisée en ce que** les au moins deux bras longitudinaux (22) sont reliés à leur extrémité avant par un bras transversal (23),
et **en ce que** chaque absorbeur (25) présente une extrémité avant libre.

2. Structure selon la revendication 1, **caractérisée en ce qu'**elle comporte des absorbeurs d'énergie (25) dont l'axe principal est situé dans le plan vertical médian de chaque bras longitudinal (22) du berceau cadre (21).

3. Structure selon la revendication 1 ou 2, **caractérisée en ce qu'**elle comporte des absorbeurs d'énergie (25) qui sont situés sensiblement à la même hauteur que celle des bras longitudinaux (22) du berceau cadre (21).

4. Structure selon la revendication 1 ou 2, **caractérisée en ce qu'**elle comporte des absorbeurs d'énergie (25) qui sont situés à une hauteur inférieure à celle des bras longitudinaux (22) du berceau cadre (21).

5. Structure selon l'une des revendications précédentes, **caractérisée en ce qu'**elle comporte des absorbeurs d'énergie (25) dont la dimension principale est longitudinale et de telle sorte qu'avant le choc, l'extrémité avant des absorbeurs d'énergie (25) est longitudinalement en retrait de l'extrémité avant de la traverse (13) de la partie supérieure 10).

6. Structure selon l'une des revendications précédentes, **caractérisée en ce qu'**elle comporte, au niveau de la partie inférieure (20), une barre transversale (41) située en avant des absorbeurs d'énergie (25).

7. Structure selon la revendication 6, **caractérisée en ce qu'**elle comporte une barre transversale (41) fixée au berceau cadre (21) par l'intermédiaire de montants sensiblement longitudinaux (43, 44), et **en ce que** ces montants sensiblement longitudinaux (43, 44) sont deux montants latéraux (43) dont l'axe principal est situé dans le plan vertical médian de chaque bras longitudinal (22) du berceau cadre (21) et au moins un montant central (44).

8. Structure selon la revendication 7, **caractérisée en ce qu'**elle comporte des absorbeurs d'énergie (25) qui chevauchent les montants latéraux (43).

## Claims

1. Motor vehicle forebody structure (1) comprising, on the one hand, an upper part (10) formed by at least two side members (11) which extend longitudinally in front of the vehicle cabin and which are connected in their front end portion by a crossmember (13) which, in the event of a frontal impact, absorbs a sufficient amount of energy to minimize the deformation of the side members (11), and comprising, on the other hand, a lower part (20) formed by at least one frame cradle (21) which supports functional components of the vehicle, which is connected to the side members (11) of the upper part (10) by vertical struts (30), and which is formed by at least two longitudinal arms (22) extending towards the front of the vehicle, the structure (1) comprising energy absorbers (25) which are fastened to the frame cradle (21) towards the front of the vehicle, the main dimension of these energy absorbers (25) being longitudinal such that, in the event of a frontal impact, these energy absorbers (25) absorb sufficient energy to minimize the deformation of the frame cradle (21), **characterized in that** the at least two longitudinal arms (22) are connected at their front end by a transverse arm (23), and **in that** each absorber (25) has a free front end.

2. Structure according to Claim 1, **characterized in that** it comprises energy absorbers (25) whose main axis is situated in the vertical mid-plane of each longitudinal arm (22) of the frame cradle (21).

3. Structure according to Claim 1 or 2, **characterized in that** it comprises energy absorbers (25) which are situated substantially at the same height as the longitudinal arms (22) of the frame cradle (21).

4. Structure according to Claim 1 or 2, **characterized in that** it comprises energy absorbers (25) which are situated at a lower height than the longitudinal arms (22) of the frame cradle (21).

5. Structure according to one of the preceding claims, **characterized in that** it comprises energy absorbers (25) whose main dimension is longitudinal and such that, before the impact, the front end of the energy absorbers (25) is longitudinally set back from the front end of the crossmember (13) of the upper part (10).

6. Structure according to one of the preceding claims, **characterized in that** it comprises, at the level of the lower part (20), a transverse bar (41) situated in front of the energy absorbers (25).

7. Structure according to Claim 6, **characterized in that** it comprises a transverse bar (41) fastened to the frame cradle (21) via substantially longitudinal struts (43, 44), and **in that** these substantially longitudinal struts (43, 44) are two lateral struts (43) whose main axis is situated in the vertical mid-plane of each longitudinal arm (22) of the frame cradle (21), and at least one central strut (44).

8. Structure according to Claim 7, **characterized in that** it comprises energy absorbers (25) which straddle the lateral struts (43).

## Patentansprüche

1. Frontpartiestruktur (1) für ein Kraftfahrzeug, die einerseits einen oberen Teil (10), der durch mindestens 5 Längsträger (11) gebildet wird, die sich in Längsrichtung vor dem Innenraum des Fahrzeugs erstrecken und die in ihrem Vorderendteil durch einen Querträger (13) verbunden sind, der bei einem Frontalaufprall eine Energiemenge aufnimmt, die dazu ausreicht, die Verformung der Längsträger (11) auf ein Minimum zu reduzieren, und andererseits einen unteren Teil (20), der durch mindestens ein Rahmenbett (21) gebildet wird, das 10 der Funktionselemente des Fahrzeugs trägt, das durch vertikale Stützen (30) mit den Längsträgern (11) des oberen Teils (10) verbunden ist und das durch mindestens zwei Längsarme (22) gebildet wird, die sich zum vorderen Ende des Fahrzeugs erstrecken, aufweist, wobei die Struktur (1) Energieabsorber (25) aufweist, die an dem Rahmenbett (21) zum vorderen Ende des Fahrzeugs hin befestigt sind, wobei die Hauptabmessung dieser Energieabsorber (25) in Längsrichtung verläuft, so dass diese Energieabsorber (25) bei einem Frontalaufprall ausreichend Energie absorbieren, um die Verformung des Rahmenbetts (21) auf ein Minimum zu reduzieren, **dadurch gekennzeichnet, dass** die mindestens zwei Längsarme (22) an ihrem Vorderende durch einen Querarm (23) verbunden sind,
und dass jeder Absorber (25) ein freies Vorderende aufweist.

2. Struktur nach Anspruch 1, **dadurch gekennzeichnet, dass** sie Energieabsorber (25) aufweist, deren Hauptachse sich in der mittleren Vertikalebene jedes Längsarms (22) des Rahmenbetts (21) befindet.

3. Struktur nach Anspruch 1 oder 2, **dadurch gekennzeichnet, dass** sie Energieabsorber (25) aufweist, die sich im Wesentlichen auf gleicher Höhe wie die der Längsarme (22) des Rahmenbetts (21) befinden.

4. Struktur nach Anspruch 1 oder 2, **dadurch gekennzeichnet, dass** sie Energieabsorber (25) aufweist, die sich auf einer niedrigeren Höhe als die der Längsarme (22) des Rahmenbetts (21) befinden.

5. Struktur nach einem der vorhergehenden Ansprüche, **dadurch gekennzeichnet, dass** sie Energieabsorber (25) aufweist, deren Hauptabmessung in Längsrichtung verläuft, derart, dass vor dem Aufprall das Vorderende der Energieabsorber (25) in Längsrichtung von dem Vorderende des Querträgers (13) des oberen Teils (10) zurückspringt.

6. Struktur nach einem der vorhergehenden Ansprüche, **dadurch gekennzeichnet, dass** sie am unteren Teil (20) eine Querstrebe (41) aufweist, die sich vor den Energieabsorbern (25) befindet.

7. Struktur nach Anspruch 6, **dadurch gekennzeichnet, dass** sie eine Querstrebe (41) aufweist, die durch im Wesentlichen in Längsrichtung verlaufende Stützen (43, 44) am Rahmenbett (21) befestigt ist, und dass diese im Wesentlichen in Längsrichtung verlaufenden Stützen (43, 44) zwei seitliche Stützen (43), deren Hauptachse sich in der mittleren Vertikalebene jedes Längsarms (22) des Rahmenbetts (21) befindet, und mindestens eine mittlere Stütze (44) sind.

8. Struktur nach Anspruch 7, **dadurch gekennzeichnet, dass** sie Energieabsorber (25) aufweist, die die seitlichen Stützen (43) übergreifen.
